# DEMANDE DE BREVET EUROPEEN

(11) **EP 1 792 531 A1**
(43) Date de publication de la demande: **06.06.2007**
(21) Numéro de dépôt: 06368014.4
(22) Date de dépôt: 29.11.2006
(51) Int. Cl.: A01C 3/06

(54) **Dispositif pour epandeur agricole sur tapis roulant a projection laterale, pour tout composte et fumier, adaptable sur les systemes d'epandange existants**

(30) Priorité: 02.12.2005 FR 0512226
(71) Demandeur: Pinheiro, Sébastien, 07130 Cateubourg (FR)
(72) Inventeur: Pinheiro, Sébastien, 07130 Cateubourg (FR)

(57) **Abrégé**

Dispositif pour l'épandage agricole et pour l'arboriculture à projection latérale, pour tout composte et fumier, adaptable sur système d'épandage tracté existant.

L'invention concerne un dispositif pour l'épandage agricole de composte et fumier de manière éparse, généreuse et homogène, par projection latérale, à droite ou à gauche, la projection réglable prend en compte l'étalement des racines.

Il est constitué d'un châssis (1) surmonté d'un caisson pyramidal (2) qui reçoit le fumier ou composte provenant de la remorque tractée, les matières tombent par gravitation sur le tapis (5).

A la mise en route, le moteur hydraulique double effet avant arrière (3), entraîne le tapis roulant (5) reposant sur trois rouleaux dits « FOUS » à roulements à billes (6) et deux rouleaux motorisés à roulements à billes (7) il entraîne également un dispositif d'engrenage à pignons (9) faisant tourner un système rotatif tripale (11) sur lequel chacune des trois pales est soudées en étoile et usinées en dents de scie.

La vitesse du système rotatif tripale (11) permet un bon ramassage du composte ou fumier provenant du tapis (5) ainsi qu'une la projection latérale du composte ou fumier, sa vitesse est réglable en fonction de l'avancé de la remorque tractée. Les bavettes latérales anti-bourrage (8) évitent aux matières de coincer le tapis.

Le dispositif selon l'invention est particulièrement destiné l'agriculture et notamment à l'arboriculture.

## Description

La présente invention concerne un dispositif pour l'épandage agricole et particulièrement l'arboriculture.

Traditionnellement, sont utilisés pour l'épandage agricole les dispositifs suivant:
- Epandeurs classiques avec un système dit à « vis sans fin », ils transportent et déposent le composte et fumier de façon compacte formant un chemin le long de la rangé d'arbre en ne tenant pas compte le l'étalement des racines.
- Epandeurs avec un système à projection latérale, pour des matières surtout liquides, peu efficace en arboriculture.

Le dispositif selon l'invention permet un épandage agricole de compostes et fumiers de manière plus éparse, généreuse et homogène, par projection latérale, à droite ou à gauche. Le rayon de projection prend mieux en compte l'étalement des racines des arbres, et mieux adapter à l'arboriculture.

Il comporte en effet selon une première caractéristique, un caisson de concentration et de réception du composte ou fumiers adaptable sur la plupart des remorques à épandage tractée actuelles, ainsi qu'un dispositif motorisé avec tapis roulant et dispositif rotatif tripale de projection.

Quand les matières arrivent de la remorque à épandage sur le dispositif inventé, le tapis les transporte jusqu'au système tripale en rotation, elles sont ainsi automatiquement projetées latéralement selon une force et une vitesse réglée à la demande et en fonction de l'avance du tracteur.

Selon des modes particuliers de réalisation :
- Le moteur double effet peut être électrique ou mécanique.
- L'engrenage à pignons pour permettre la rotation du système de projection peut être à poulies métallique avec courroies.

Les dessins annexés illustrent l'invention :

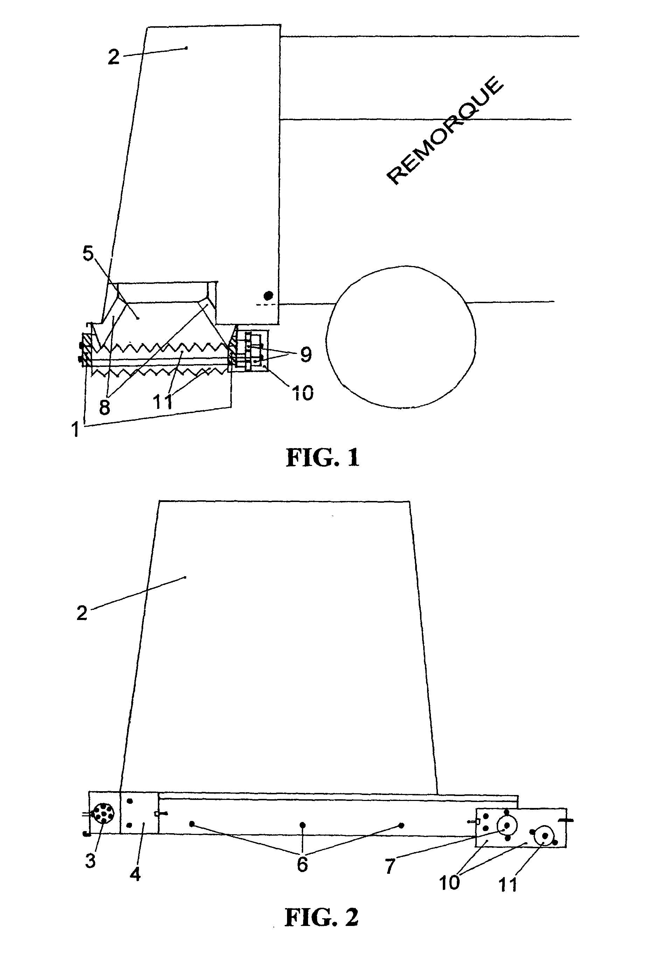

La figure 1 représente une vue de coté du dispositif de l'invention avec la remorque.

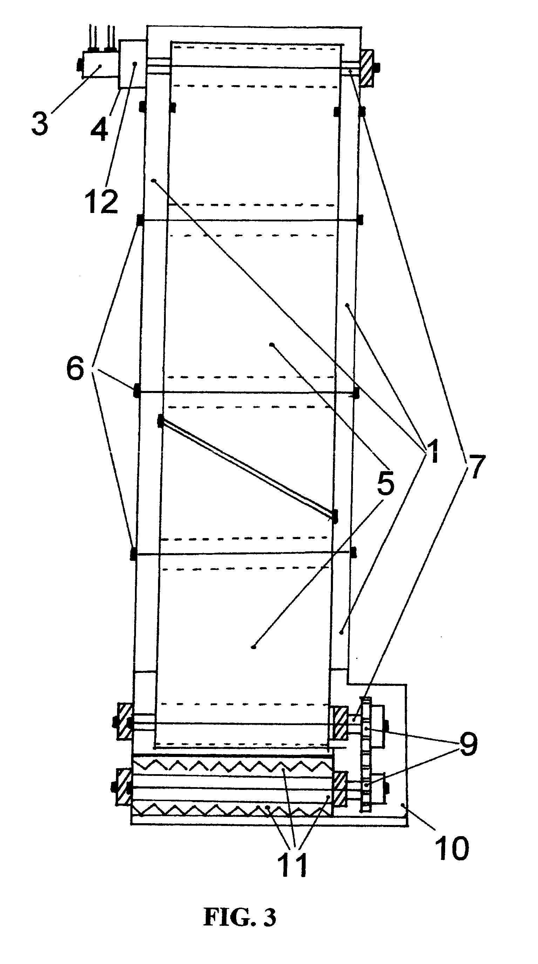

La figure 2 représente une vue de derrière la remorque du dispositif de l'invention La figure 3 représente une vue de dessus du dispositif de l'invention sans le caisson de réception des matières.

En référence à ces dessins, le dispositif comporte un châssis (1). Un caisson pyramidale de concentration et de réception du composte ou fumiers (2). Un moteur hydraulique double effet avant arrière (3). Un support moteur (4) avec trappe d'accès (12). Un tapis roulant en de préférence en caoutchouc (5). Trois rouleaux dits « FOUS » à roulements à billes (6). Deux rouleaux motorisés à roulements à billes (7). Deux bavettes latérales anti-bourrage (8). Un engrenage à pignons avec tendeur de chaîne (9). Un support pour l'engrenage à pignons (10). Un dispositif rotatif tripale de la largeur du tapis roulant et dont chacune des trois pales est usinée en dents de scie (11).

Dans la forme de réalisation selon les figures (1 et 3), le dispositif tripale (11) est constitué d'un axe métallique avec roulements à billes aux deux extrémités sur lequel sont soudées en étoile, trois tôles de fer usinées en dents de scies, pour permettre un bon ramassage du composte ou fumier provenant du tapis (5) et une meilleure projection, il s'emboîte en bout de tapis (5) entre les longerons du châssis.

Dans la forme de réalisation selon les figures (1et 3) l'engrenage à pignons (9) est constitué de deux plateaux ronds dentelés de diamètre différent, avec une chaîne d'entraînement et un tendeur.

Dans la forme de réalisation selon les figures (2 et 3) le support moteur (4) se fixe au châssis il comporte des fentes pour permettre un réglage coulissant il est munit d'une trappe d'accès (12).

A l'extrémité du tapis roulant (5) sur son support (4) le moteur (3) et le rouleau motorisé à roulements à billes (7) sont assemblés par la trappe d'accès (12) et maintenus par une clavette.

A l'autre extrémité du tapis roulant (5) l'engrenage à pignons (9) est assemblé au dispositif tripale (11) et au rouleau motorisé à roulements à billes (7) ils sont maintenus par des clavettes.

L'engrenage à pignons (9) se fixe au châssis il comporte des fentes pour permettre un réglage coulissant et se boulonne sur le châssis (1).

Les bavettes latérales anti-bourrage (8) sont fixées à l'intérieur du châssis (1) et inclinées, elles s'appuient sur le tapis (5)

Le châssis (1) et le caisson (2) sont ajustés et assemblés, puis fixés à l'arrière d'une remorque à épandage classique tractée, les matières à épandre arrivent sur le dispositif inventé.

Le moteur (3) est actionné par le système hydraulique du tracteur, il permet de créer le mouvement rotatif, à vitesse variable et synchronisée.
- Le tapis (5) repose sur trois rouleaux dits « FOUS» à roulements à billes (6) et deux rouleaux motorisés à roulements à billes (7) il achemine les matières à épandre.
- L'engrenage à pignons avec tendeur à chaîne (9), fait tourner le dispositif rotatif tripale usiné en dents de scie (11).

Les bavettes latérales anti-bourrage (8) empêchent les matières de coincer le tapis (5).

En arrivant sur le dispositif rotatif tripale le composte ou fumier est projetés sur un distance variant de 50 centimètres à 4 mètres, sa vitesse de rotation est réglable en fonction du roulage de la remorque tracté.

Le dispositif selon l'invention est particulièrement destiné à l'agriculture et notamment à l'arboriculture pour un épandage harmonieux de tout composte et fumier.

## Revendications

1. Dispositif pour l'épandage agricole et pour l'arboriculture à projection latérale, de compost et de fumier, adaptable sur les épandeurs existants, **caractérisé en ce qu'**il comporte un châssis (1), un caisson pyramidal (2), un tapis roulant (5) disposé transversalement au déplacement de l'épandeur reposant sur deux rouleaux motorisés à roulements à billes (7) et trois rouleaux dits "FOUS" à roulements à billes (6), un dispositif rotatif tripale (11) mis en rotation par un engrenage à pignons (9) avec tendeur à chaîne, le moteur hydraulique double effet avant arrière (3) entraînant l'ensemble tapis roulant, rouleaux et dispositif tripale.

2. Dispositif selon la revendication 1 **caractérisé en ce que** le dispositif tripale (11) est un ensemble de trois tôles de métal usinées en dents de scies soudées en étoile sur un axe métallique à roulements à billes, actionné par un engrenage à pignons (9) avec tendeur à chaîne entraîné par moteur (3) qui permet ainsi un bon ramassage du compost ou fumier provenant du tapis (5) et une meilleure projection latérale du compost ou fumier.

3. Dispositif selon la revendication 1 ou la revendication 2 **caractérisé en ce que** l'engrenage à pignons (9) avec tendeur à chaîne se fixe sur le support (10) de l'engrenage à pignons puis se fixe sur le châssis (1), est réglable et coulissant pour permettre en cas de besoin la tension du tapis (5), et s'emboîte sur le dispositif tripale (11) et le rouleau motorisé à roulements à billes (7).

4. Dispositif selon l'une quelconque des revendications précédentes **caractérisé en ce que** le moteur (3) se fixe sur le support moteur (4) réglable et coulissant pour permettre en cas de besoin la tension du tapis (5) le tout est assemblé au châssis (1) et s'emboîte aux rouleaux motorisés à roulements à billes (7) par la trappe d'accès (12).
